# EUROPÄISCHE PATENTSCHRIFT

(11) **EP 2 730 744 B1**
(45) Veröffentlichungstag und Bekanntmachung des Hinweises auf die Patenterteilung: **24.06.2015**
(21) Anmeldenummer: 13191872.4
(22) Anmeldetag: 07.11.2013
(51) Int. Cl.: F01D 5/08, F01D 9/04, F01D 11/00, F02C 6/12

(54) **Abgasturbolader**
Exhaust gas turbo charger
Turbosoufflante de gaz d'échappement

(30) Priorität: 08.11.2012 EP 12191790
(43) Veröffentlichungstag der Anmeldung: 14.05.2014
(73) Patentinhaber: ABB Turbo Systems AG, 5400 Baden (CH)
(72) Erfinder: Vacca, Andrea, 5242 Lupfig (CH); Oeschger, Daniel, CH-5430 Wettingen (CH); Rechin, Thomas, CH-5400 Baden (CH)
(74) Vertreter: ABB Patent Attorneys

(56) Entgegenhaltungen:
- DE-A1-102005 062 562
- DE-A1-102010 009 201
- JP-A- H09 217 631
- JP-A- S61 142 328
- US-A1- 2008 075 583

## Beschreibung

### Technisches Gebiet

Die Erfindung bezieht sich auf das Gebiet der Abgasturbolader von aufgeladenen Brennkraftmaschinen.

Sie betrifft einen Abgasturbolader mit einem als Einheit aus einer äusseren Gehäusehülle herausziehbaren Rotorblock.

### Stand der Technik

Abgasturbolader werden zur Leistungssteigerung von Brennkraftmaschinen eingesetzt. Dabei wird die Abgasturbine des Abgasturboladers mit den Abgasen der Brennkraftmaschine beaufschlagt und deren kinetische Energie zum Ansaugen und Verdichten von Luft für die Brennkraftmaschine verwendet.

Bei Abgasturboladern mit axial durchströmten Abgasturbinen (in diesem Dokument hiernach kurz Axialturbine genannt ist der Turbinendiffusor mechanisch - etwa über eine feste Schraubverbindung - mit dem Gasaustrittsgehäuse der Turbine gekoppelt. Zur Demontage des Turbinendiffusors muss dabei erst der Rotorblock aus dem Gehäuse ausgebaut werden, und anschliessend muss der Turbinendiffusor vom Gasaustrittsgehäuse gelöst werden, was insbesondere bei eingerosteten oder anderswie verklemmten Befestigungsmitteln oder allein aufgrund der Zugänglichkeit der zu lösenden Befestigungsmittel durch die Öffnung im Lagergehäuse eine mühsame und zeitintensive Arbeit sein kann. Um den Ausbau sämtlicher, der Abgasströmung ausgesetzter Teile eines Abgasturboladers bei der Wartung zu vereinfachen, gibt es Bestrebungen, das Design des Abgasturboladers derart zu optimieren, dass sich der gesamte Rotorblock - also alle rotierenden Teile und zugehörige Lagerbereiche - mitsamt der Leitvorrichtung stromaufwärts der Abgasturbine, zusammen als Einheit aus einer äusseren Gehäusehülle herauslösen lässt.

Bei einem derartigen aufgebauten Abgasturbolader befindet sich zwischen dem Gasaustrittsgehäuse, welches ein Teil der äusseren Gehäusehülle ist, und den Strömungskanal stromabwärts des Turbinenrades begrenzenden Gehäuseteilen - radial äusserer Diffusor sowie radial innenliegende Haube - zu jedem Betriebszeitpunkt ein Radialspalt. Dies ist aufgrund der Entkopplung der Kräfte der Gehäuseteile im Rotorblock gegenüber dem Gasaustrittsgehäuse notwendig. Durch diesen Spalt kann Heissgas in die Trennfuge zwischen der äusseren Gehäusehülle und dem Rotorblock eindringen. Durch das in die Trennfuge und in diesem Bereich allfällig vorhandene Hohlräume eindringende Heissgas werden zudem höhere Bauteiltemperaturen initiiert. Dadurch erhöhen sich die Materialtemperatur in den Lagerteilen des Rotorblocks weshalb ein zusätzlicher Kühlungsaufwand erforderlich ist.

Bei Abgasturboladern mit Axialturbinen wird auf der Turbinenseite häufig Sperrluft eingesetzt, um den Lagerbereich vor eindringendem Heissgas zu schützen oder um die Turbinenradnabe zu kühlen. Diese Sperrluft ist meist ein Beiprodukt der Verdichterradschubentlastung, bei welcher der Luftdruck im Rückraum des Verdichterrades reduziert wird, indem die aus dem Strömungskanal des Verdichterrades in diesen Bereich eindringende Luft abgeführt wird.

JP H09 217621 offenbart einen Abgasturbolader mit einem als Einheit in axialer Richtung aus einer äusseren Gehäusehülle hinausziehbaren Rotorblock.

DE 10 2005 062 562 A1 offenbart einen Abgasturbolader mit umgekehrt angeströmter Axialturbine, bei welcher das Gaseintrittsgehäuse zwischen Turbinen- und Verdichterrad angeordnet ist. Anströmseitig sind die den Strömungskanal im Turbinenbereich begrenzenden Wände über den dem Turbinenrad vorgelagerten Düsenring oder eigens dafür vorgesehene Stützstreben miteinander verbunden.

US 2008/075583 offenbart eine Radialturbine eines Abgasturboladers, bei welcher im Anströmbereich ein Übergang zwischen dem Gaseintrittsgehäuse und dem Lagergehäuse mittels einer Sperrluftzuführung gegen eindringendes Heissgas abgedichtet ist.

### Kurze Darstellung der Erfindung

Die Aufgabe der vorliegenden Erfindung besteht darin, bei einem Abgasturbolader der oben genannten Bauweise den Übergang zwischen dem Rotorblock und der äusserer Gehäusehülle gegen eintretendes Heissgas abzudichten.

Erfindungsgemäss wird dies dadurch erreicht, dass zur Abdichtung des sich zwischen dem Rotorblock und der äusserer Gehäusehülle erstreckenden Radialspalts im Innern des Rotorblocks ein Sperrluftkanal vorgesehen ist, welcher auf der Verdichterseite des im Rotorblock enthaltenen, inneren Lagergehäuses entspringt und in den Radialspalt mündet.

Der Sperrluftkanal entspringt vorteilhafterweise einem Hohlraum im Rücken des Verdichterrades. Dadurch unterstützt die entnommene Sperrluft die Verdichterradschubentlastung, indem der Druck im Rückraum des Verdichterrades verringert und somit die in Richtung der Verdichterseite wirkende Kraft reduziert wird.

Ist entlang des Radialspalts ein Hohlraum vorgesehen, welcher sich entlang des Umfangs des Rotorblocks erstreckt, ergibt sich eine verbesserte Verteilung der Sperrluft entlang des Ringspalts.

Ebenfalls einer besseren, gleichmässigeren Verteilung der Sperrluft dienlich sein können mehrere, in Umfangsrichtung verteilt angeordnete Sperrluftkanäle.

Optional kann im Sperrluftkanal ein Ventil zur Steuerung der in den Radialspalt geleiteten Sperrluft vorgesehen sein.

Weitere Vorteile ergeben sich aus den abhängigen Ansprüchen.

### Kurze Beschreibung der Zeichnungen

Anschliessend ist der erfindungsgemäss ausgebildete Abgasturbolader anhand der Zeichnungen erläutert. Hierbei zeigt
- Fig. 1: eine schematische Schnittbild-Darstellung eines Abgasturboladers mit einem in einer äusseren Gehäusehülle eingesetzten Rotorblock,
- Fig. 2: den Abgasturbolader nach Fig. 1, mit dem teilweise aus der äusseren Gehäusehülle herausgezogenem Rotorblock.

### Weg zur Ausführung der Erfindung

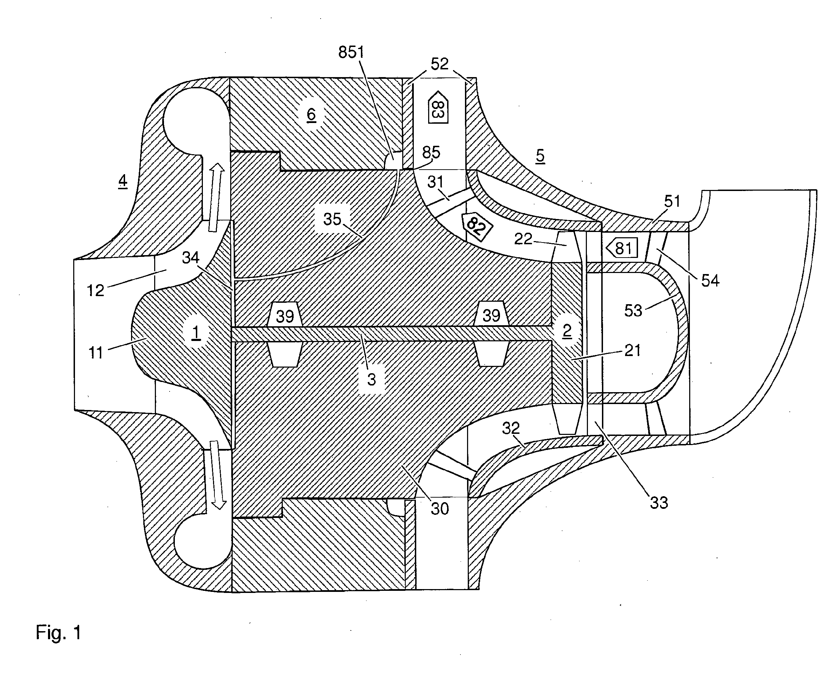

Fig. 1 zeigt in einer schematischen Schnittbild-Darstellung einen Abgasturbolader mit einem in einer äusseren Gehäusehülle eingesetzten Rotorblock. Der Abgasturbolader umfasst eine Abgasturbine mit einem Turbinenrad 2, sowie ein über die Welle 3 mit dem Turbinenrad verbundenes Verdichterrad 1. Die dargestellte Turbine ist vom Typ Axialturbine, bei welchem das heisse Abgas im axial ausgerichteten Strömungskanal 81 auf das Turbinenrad trifft. Das Turbinenrad 2 umfasst eine Vielzahl von Laufschaufeln 22, welche am radial äusseren Rand der Nabe 21 angeordnet sind. Die Welle 3 ist form-, kraft- oder materialschlüssig mit der Nabe 21 des Turbinenrades verbunden. Zur Lagerung der Welle 3 sind in der Figur schematisch angedeutete Lager 39 vorgesehen. Typischerweise ist die Welle mittels zweier Radiallagern und mindestens einem Axiallager im Lagergehäuse drehbar gelagert. Am anderen Ende der Welle 3 ist das Verdichterrad angeordnet. Das Verdichterrad ist typischerweise auf das freie Wellenende aufgeschraubt. Wie das Turbinenrad weist das Verdichterrad 1 eine Vielzahl von Laufschaufeln 12 auf, welche entlang des Umfangs verteilt auf der Nabe 11 angeordnet sind. Der dargestellte Verdichter ist vom Typ Radialverdichter, bei welchem die zu verdichtende Luft in axialer Richtung angesaugt und im Bereich des Verdichterrades in die radiale Richtung umgelenkt wird.

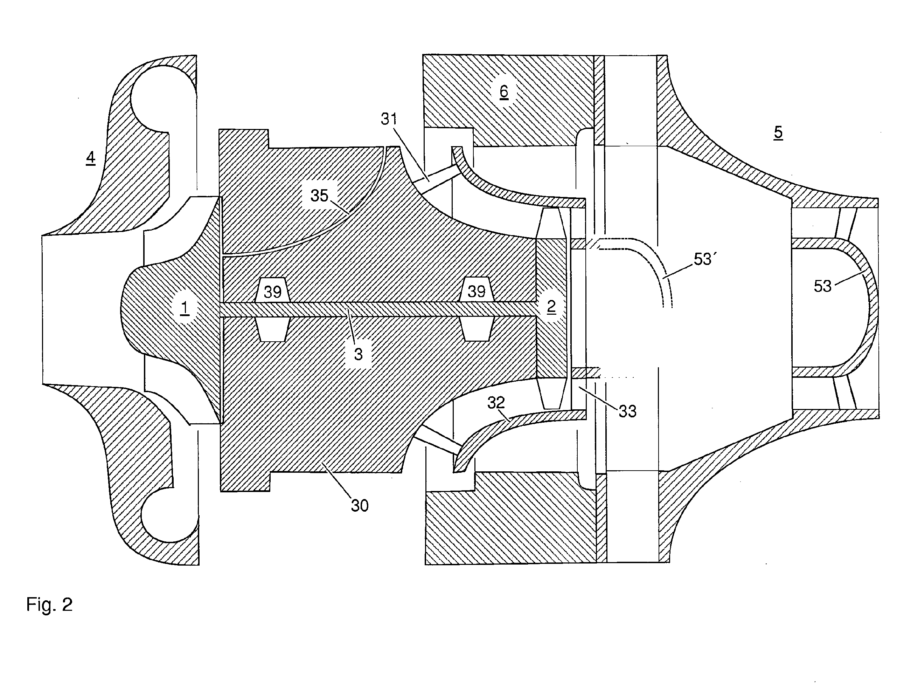

Beim dargestellten Abgasturbolader ist der innere Rotorblock als eine Einheit aus der äusseren Gehäusehülle ausziehbar, und zwar in axialer Richtung (bezüglich der Achse der Welle des Abgasturboladers) hin zur Verdichterseite, also nach links. Fig. 2 zeigt den Abgasturbolader mit abgesetztem Verdichtergehäuse 4 und teilweise aus der Gehäusehülle herausgezogenem Rotorblock. In der schematischen Darstellung sind die Befestigungsmittel, mit denen die einzelnen Gehäuseteile zusammengehalten sind, nicht dargestellt.

Der Rotorblock umfasst neben den rotierenden Bauteilen - also dem Turbinenrad 2, dem Verdichterrad 1 und der dazwischenliegenden Welle 3 - auch die Lagerteile 39 sowie das innere Lagergehäuse 30. In der Figur ist der Innenbereich des inneren Lagergehäuses 30, wie etwa die Schmierölversorgungsleitungen für die Lagerung, nicht weiter im Detail dargestellt. Der Rotorblock umfasst im Turbinenbereich weiter die Diffusorwand 32, sowie die - von der Lagerseite her gesehen - hinter dem Turbinenrad 2 angeordnete Leitvorrichtung (Düsenring) 33. Die Leitvorrichtung dient zum Ausrichten der Strömung auf die Laufschaufeln 22 des Turbinenrades. Die Diffusorwand 32 ist über Streben 31 mit dem inneren Lagergehäuse verbunden, wobei die Streben durch den Strömungskanal 82 geführt sind. Der Strömungskanal 82, welcher das heisse Abgas im Diffusorbereich der Turbine vom Turbinenrad bis an den radial äusseren Umfang des Rotorblocks führt ist auf der der Welle zugewandten, radial inneren Seite durch eine Gehäusewand (Haube) des inneren Lagergehäuses 30 begrenzt. Auf der gegenüberliegenden Seite, also der radial äusseren Seite ist der Strömungskanal 82 durch die Diffusorwand 32 begrenzt. Die Diffusorwand ist turbinenseitig bis über die Laufschaufeln 22 des Turbinenrades 2 verlängert und trägt die stromaufwärts der Laufschaufeln 22 des Turbinenrades 2 angeordnete Leitvorrichtung 33. Diese Bauweise erlaubt das gleichzeitige Entfernen aller Bauteile der Abgasturbine, welche der Strömung ausgesetzt sind und welche im Servicefall gewartet oder allenfalls ersetzt werden müssen. Der Rotorblock lässt sich, wie oben erwähnt, als eine Einheit aus der äusseren Gehäusehülle herausziehen.

Die äussere Gehäusehülle umfasst das Turbinengehäuse 5 und das äussere Lagergehäuse 6. Diese beiden Gehäuseteile bilden typischerweise die Verbindung des Abgasturboladers zur Motorenkonsole oder allgemein zum Untergrund, auf welchem der Abgasturbolader befestig ist. Das Turbinengehäuse 5 lässt sich unterteilen in das Gaseintrittsgehäuse 51 und das Gasaustrittgehäuse 52. Das Gaseintrittsgehäuse umfasst in der Regel eine haubenförmige Kalotte 53 im radial inneren Bereich, welche den rohrförmigen Anströmbereich mit kreisförmigem Querschnitt in einen Strömungsbereich mit kreisringförmigem Querschnitt überführt. Die Kalotte 53 kann entweder als Teil des Turbinengehäuses über Streben 54 am Gaseintrittsgehäuse 51 befestig sein, oder aber - wie in Fig. 2 mit dem Bezugszeichen 53' angedeutet - als Teil des Rotorblocks mit dem Düsenring 33 tragend verbunden sein. Im letzteren Fall entfallen die Streben 54 im Strömungsbereich des Gaseintrittsgehäuses. Verdichterseitig umfasst das Turboladergehäuse das Verdichtergehäuse 4.

Im Übergangsbereich zwischen der äusseren Gehäusehülle und dem Rotorblock ist eine Trennfuge vorhanden, entlang welcher der Rotorblock aus der äusseren Gehäusehülle herausziehbar ist. Idealerweise weist die Trennfuge, wie in den Figuren dargestellt, mindestens einen Axialanschlag auf. Im Bereich dieses Axialanschlags liegt der Rotorblock schlüssig am äusseren Lagergehäuse 6 an, wodurch eine gewisse Gasdichtheit gewährleistet werden kann.

In der Trennfuge ist zwischen dem Gasaustrittsgehäuse 52 und den den Strömungskanal stromabwärts des Turbinenrades begrenzenden Gehäuseteilen - radial äussere Diffusorwand 32 sowie radial innenliegende Haube - zu jedem Betriebszeitpunkt und unabhängig von der Betriebstemperatur ein Radialspalt vorhanden. Dies ist zur Entkopplung der auf die Gehäuseteile im Rotorblock wirkenden Kräfte gegenüber dem Gasaustrittsgehäuse notwendig. Um aber zu verhindern, dass Heissgas durch den Radialspalt in die Trennfuge im Übergang zwischen der äusseren Gehäusehülle und dem Rotorblock eindringt, wird erfindungsgemäss Sperrluft in den Bereich dieses Radialspalts eingeblasen. Die Sperrluft wird dabei verdichterseitig entnommen und durch das innere Lagergehäuse 30 in die Trennfuge geführt. Hierfür erstreckt sich ein Sperrluftkanal 35, in der dargestellten Ausführungsform aus einem Hohlraum 34 im Rücken des Verdichterrades 1 bis hin zu einem umlaufenden, ringförmigen Hohlraum 851 in der Trennfuge. Der Hohlraum 851 grenzt unmittelbar an den ringförmigen Spalt 85 zwischen dem Gasaustrittsgehäuse 62 und dem Bereich der Haube des inneren Lagergehäuses und sorgt mit dem gegenüber dem Radialspalt vergrösserten Querschnitt für eine bessere Verteilung der Sperrluft entlang des Umfangs. Optional können mehrere Sperrluftkanäle vorhanden sein, welche in Umfangsrichtung verteilt im inneren Lagergehäuse angeordnet sind, und so für eine gleichmässigere Verteilung der Sperrluft entlang der Trennfuge sorgen.

Dank der in den Hohlraum 85 eingeführten Sperrluft kann verhindert werden, dass Heissgas in die Trennfuge und im Bereich der Trennfuge allfällig vorhandene, weitere Hohlräume eindringt. Dadurch können Ablagerungen durch verschmutztes Abgas verhindert werden und gleichzeitig können die Lagerteile von einer Erwärmung durch eindringendes Abgas bewahrt werden.

Optional kann im mindestens einen Sperrluftkanal ein Ventil zur Steuerung der in den Radialspalt geleiteten Sperrluft vorgesehen sein. Damit kann die Menge der aus dem Verdichterrückraum abgeführten Sperrluft dynamisch beeinflusst werden.

Optional kann die Sperrluft aus einer externen Quelle (Druckluftquelle) in den Sperrluftkanal eingebracht werden.

### Bezugszeichenliste

- 1: Verdichterrad
- 11: Nabe des Verdichterrades
- 12: Laufschaufeln des Verdichterrades
- 2: Turbinenrad
- 21: Nabe des Turbinenrades
- 22: Laufschaufeln des Turbinenrades
- 3: Welle
- 30: inneres Lagergehäuse
- 31: Strebe
- 32: Diffusorwand
- 33: Leitvorrichtung (Düsenring)
- 34: Hohlraum auf der Rückseite des Verdichterrades
- 35: Sperrluftkanal
- 39: Lager für die Welle
- 4: Verdichtergehäuse
- 5: Turbinengehäuse
- 51: Gaseintrittsgehäuse
- 52: Gasaustrittsgehäuse
- 53, 53': Kalotte
- 54: Strebe
- 6: Äusseres Lagergehäuse
- 7: Gaszuführung
- 81: Strömungskanal am Gaseintritt der Turbine
- 82: Strömungskanal im Diffusor der Turbine
- 83: Strömungskanal im Gasaustrittsgehäuse
- 85: Radialspalt zwischen innerem Rotorblock und Gasaustrittsgehäuse
- 851: Hohlraum

## Patentansprüche

1. Abgasturbolader, umfassend
eine äussere Gehäusehülle mit einem Turbinengehäuse (5) und einem äusseren Lagergehäuse (6), wobei das Turbinengehäuse ein Gaseintrittsgehäuse (51) und ein Gasaustrittsgehäuse (52) umfasst; sowie
einen im Innern der Gehäusehülle angeordneten Rotorblock mit einem inneren Lagergehäuse (30), einer im inneren Lagergehäuse drehbar gelagerten Welle (3), einem mit der Welle verbundenen, verdichterseitig des inneren Lagergehäuses angeordneten Verdichterrad (1) sowie einem ebenfalls mit der Welle verbundenem, turbinenseitig des inneren Lagergehäuses angeordneten Turbinenrad (2), wobei der Rotorblock als Einheit in axialer Richtung zur Verdichterseite hin aus der äusseren Gehäusehülle hinausschiebbar ist, wobei
im Rotorblock ein entlang des Umfangs des Rotorblocks nach radial Aussen geöffneter, sich vom Turbinenrad bis an den äusseren Umfang des Rotorblocks erstreckender Strömungskanal (82) angeordnet ist; welcher Strömungskanal (82) auf der der Welle zugewandten Seite durch das innere Lagergehäuse 30 und auf der gegenüberliegenden Seite durch eine über Streben 31 mit dem inneren Lagergehäuse verbundene Diffusorwand 32 begrenzt ist und welcher Strömungskanal (82) radial nach aussen in einen ringförmigen Strömungskanal (83) im Gasaustrittsgehäuse (52) mündet, wobei im Übergangsbereich der beiden Strömungskanäle (82, 83) zwischen dem inneren Lagergehäuse (30) und dem Gasaustrittsgehäuse (52) ein entlang des Umfangs verlaufender Radialspalt (85) vorhanden ist, und wobei
zur Abdichtung des Radialspalts (85) im inneren Lagergehäuse des Rotorblocks ein Sperrluftkanal (35) vorgesehen ist, welcher auf der Verdichterseite des inneren Lagergehäuses entspringt und in den Radialspalt (85) mündet.

2. Abgasturbolader nach Anspruch 1, wobei der Sperrluftkanal (35) einem sich zwischen einer Rückwand des Verdichterrades (1) und dem inneren Lagergehäuse (30)
erstreckenden Hohlraum (34) entspringt.

3. Abgasturbolader nach einem der vorangehenden Ansprüche, wobei der Sperrluftkanal (35) in einen entlang des Radialspalts (85) verlaufenden Hohlraum (851) mündet.

4. Abgasturbolader nach einem der vorangehenden Ansprüche, wobei im Sperrluftkanal ein Steuerventil vorgesehen ist.

5. Abgasturbolader nach Anspruch 1, wobei der Sperrluftkanal mit einer externen Sperrluftversorgung verbunden ist.

6. Abgasturbolader nach einem der vorangehenden Ansprüche, wobei mehrere Sperrluftkanäle (35) in Umfangsrichtung verteilt angeordnet sind, welche jeweils die Verdichterseite des inneren Lagergehäuses mit dem Radialspalt (85) verbinden.

## Claims

1. Exhaust-gas turbocharger, comprising
an outer housing casing with a turbine housing (5) and with an outer bearing housing (6), wherein the turbine housing comprises a gas inlet housing (51) and a gas outlet housing (52); and
a rotor block, arranged in the interior of the housing casing, with an inner bearing housing (30), with a shaft (3) mounted rotatably in the inner bearing housing, with a compressor wheel (1) connected to the shaft and arranged at the compressor side of the inner bearing housing, and with a turbine wheel (2) likewise connected to the shaft and arranged at the turbine side of the inner bearing housing, wherein the rotor block can, as a unit, be pushed out of the outer housing casing in the axial direction toward the compressor side, wherein,
in the rotor block, there is arranged a flow duct (82) which is open in a radially outward direction along the circumference of the rotor block and which extends from the turbine wheel to the outer circumference of the rotor block, which flow duct (82) is delimited, on the side facing toward the shaft, by the inner bearing housing (30), and on the opposite side, by a diffuser wall (32) which is connected via struts (31) to the inner bearing housing, and which flow duct (82) issues in a radially outward direction into an annular flow duct (83) in the gas outlet housing (52), wherein, in the transition region of the two flow ducts (82, 83) between the inner bearing housing (30) and the gas outlet housing (52), there is provided a radial gap (85) which runs along the circumference, and wherein,
to seal off the radial gap (85), a sealing air duct (35) is provided in the inner bearing housing of the rotor block, which sealing air duct originates on the compressor side of the inner bearing housing and issues into the radial gap (85).

2. Exhaust-gas turbocharger according to Claim 1, wherein the sealing air duct (35) originates from a cavity (34) which extends between a rear wall of the compressor wheel (1) and the inner bearing housing (30).

3. Exhaust-gas turbocharger according to one of the preceding claims, wherein the sealing air duct (35) issues into a cavity (851) which runs along the radial gap (85).

4. Exhaust-gas turbocharger according to one of the preceding claims, wherein a control valve is provided in the sealing air duct.

5. Exhaust-gas turbocharger according to Claim 1, wherein the sealing air duct is connected to an external sealing air supply.

6. Exhaust-gas turbocharger according to one of the preceding claims, wherein multiple sealing air ducts (35) are arranged so as to be distributed in the circumferential direction, which sealing air ducts each connect the compressor side of the inner bearing housing to the radial gap (85).

## Revendications

1. Turbosoufflante à gaz d'échappement, comprenant :
une enveloppe de boîtier extérieure avec un boîtier de turbine (5) et un boîtier de palier extérieur (6), le boîtier de turbine comprenant un boîtier d'entrée de gaz (51) et un boîtier de sortie de gaz (52) ; et
un bloc rotor disposé à l'intérieur de l'enveloppe de boîtier avec un boîtier de palier intérieur (30),
un arbre (3) monté à rotation dans le boîtier de palier intérieur, une roue de compresseur (1) connectée à l'arbre, disposée du côté du compresseur du boîtier de palier intérieur, ainsi qu'une roue de turbine (2) également connectée à l'arbre,
disposée du côté de la turbine du boîtier de palier intérieur, le bloc rotor pouvant être ressorti en tant qu'unité dans la direction axiale vers le côté du compresseur hors de l'enveloppe de boîtier extérieure,
un canal d'écoulement (82) ouvert le long de la périphérie du bloc rotor radialement vers l'extérieur, s'étendant depuis la roue de turbine jusqu'à la périphérie extérieure du bloc rotor étant disposé dans le bloc rotor ; lequel canal d'écoulement (82) étant limité du côté tourné vers l'arbre par le boîtier de palier intérieur (30) et
du côté opposé par une paroi de diffuseur (32) connectée par le biais d'entretoises (31) au boîtier de palier intérieur et lequel canal d'écoulement (82) débouchant radialement vers l'extérieur dans un canal d'écoulement annulaire (83) dans le boîtier de sortie de gaz (52), une fente radiale (85) s'étendant le long de la périphérie étant prévue dans la région de transition des deux canaux d'écoulement (82, 83) entre le boîtier de palier intérieur (30) et le boîtier de sortie de gaz (52),
un canal d'air barrière (35) étant prévu pour étanchéifier la fente radiale (85) dans le boîtier de palier intérieur du bloc rotor, lequel part du côté du compresseur du boîtier de palier intérieur et débouche dans la fente radiale (85).

2. Turbosoufflante à gaz d'échappement selon la revendication 1, dans laquelle le canal d'air barrière (35) part d'un espace creux (34) s'étendant entre une paroi arrière de la roue de compresseur (1) et le boîtier de palier intérieur (30).

3. Turbosoufflante à gaz d'échappement selon l'une quelconque des revendications précédentes, dans laquelle le canal d'air barrière (35) débouche dans une cavité (851) s'étendant le long de la fente radiale (85).

4. Turbosoufflante à gaz d'échappement selon l'une quelconque des revendications précédentes, dans laquelle une soupape de commande est prévue dans le canal d'air barrière.

5. Turbosoufflante à gaz d'échappement selon la revendication 1, dans laquelle le canal d'air barrière est connecté à une alimentation en air barrière extérieure.

6. Turbosoufflante à gaz d'échappement selon l'une quelconque des revendications précédentes, dans laquelle plusieurs canaux d'air barrière (35) sont répartis dans la direction périphérique, lesquels relient à chaque fois le côté du compresseur du boîtier de palier intérieur à la fente radiale (85).
